(19) Europäisches Patentamt
European Patent Office
Office européen des brevets

(11) Veröffentlichungsnummer: **0 026 915**
**B1**

(12) **EUROPÄISCHE PATENTSCHRIFT**

(45) Veröffentlichungstag der Patentschrift: **17.04.85**

(51) Int. Cl.⁴: **C 08 G 18/32**, C 08 G 18/14

(21) Anmeldenummer: **80105935.3**

(22) Anmeldetag: **01.10.80**

(54) **Verfahren zur Herstellung von gegebenenfalls zellhaltigen Polyurethan-Polyharnstoff-Formkörpern.**

(30) Priorität: **08.10.79 DE 2940738**

(43) Veröffentlichungstag der Anmeldung:
**15.04.81 Patentblatt 81/15**

(45) Bekanntmachung des Hinweises auf die Patenterteilung:
**17.04.85 Patentblatt 85/16**

(84) Benannte Vertragsstaaten:
**BE DE FR GB IT NL**

(56) Entgegenhaltungen:
EP - A - 0 000 360
DE - A - 2 156 477
DE - A - 2 622 951
US - A - 3 977 989

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Nissen, Dietmar, Dr., Ziegelhaeuser Landstrasse 31, D-6900 Heidelberg (DE)**
Erfinder: **Schuster, Ludwig, Dr., Weinheimer Strasse 44, D-6703 Limburgerhof (DE)**
Erfinder: **Hutchison, John, Dr., Hans-Willmann-Strasse 8, D-6706 Wachenheim (DE)**
Erfinder: **Marx, Matthias, Dr., Seebacher Strasse 49, D-6702 Bad Duerkheim (DE)**
Erfinder: **Wurmb, Rolf, Dr., Kastellweg 10, D-6900 Heidelberg (DE)**

**EP 0 026 915 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Einstufen-Verfahren zur Herstellung von gegebenenfalls zellhaltigen Polyurethan-Polyharnstoff-Formkörpern, vorzugsweise mittels der Reaktionsspritzgußtechnik, durch Umsetzung von organischen Polyisocyanaten, Polyolen, Diamino-diphenylmethanen der Formel

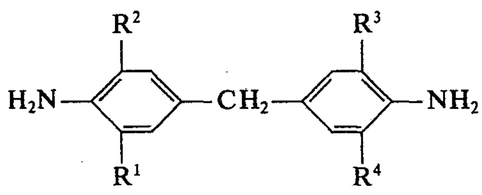

in der $R^1$, $R^2$, $R^3$ und $R^4$ gleich oder verschieden sind und einen Methyl-, Äthyl-, Isopropyl-, sek.-Butyl- und tert.-Butylrest bedeuten, wobei mindestens einer der Reste ein Isopropyl- oder sek.-Butylrest sein muß, Katalysatoren sowie gegebenenfalls Kettenverlängerungsmitteln, sek. aromatischen Diaminen, 3,3',5,5'-tetra-n-alkylsubstituierten 4,4'-Diamino-diphenylmethanen, Treibmitteln, Hilfs- und Zusatzstoffen.

Die Herstellung von vernetzten Kunststoffen nach dem Isocyanat-Polyadditionsverfahren ist bekannt. Nach Angaben der DE-AS 1 196 864 (US 3 099 516) werden hierzu Hydroxylgruppen aufweisende Verbindungen und Polyisocyanate in Gegenwart von Treibmitteln und Katalysatoren in Formen verschäumt.

Bei geeigneter Wahl der Hydroxylgruppen aufweisenden Polyester, Polyäther, Polyesteramide u. a. und organischen Polyisocyanate sowie durch zusätzliche Mitverwendung von Kettenverlängerungsmitteln, wie Glykolen oder Diaminen, können nach dieser Methode sowohl elastische wie starre Polyurethanelastomere sowie alle dazwischen liegenden Modifikationen hergestellt werden.

Zur Herstellung der Polyurethanelastomeren werden nach DE-PS 831 604 (US 2 778 810) aus den hydroxylgruppenhaltigen Verbindungen und Polyisocyanaten zunächst NCO-Gruppen haltige Präpolymere hergestellt, die dann in einer zweiten Stufe mit dem Kettenverlängerungsmittel zum hochmolekularen Elastomeren umgesetzt werden.

Diamine als Kettenverlängerungsmittel konnten im allgemeinen nicht nach dem one-shot-Verfahren verarbeitet werden. Nach Angaben der DE-AS 1 149 523 (US 3 105 062) werden den flüssigen NCO-Gruppen haltigen Präpolymeren kristalline aromatische diprimäre Diamine in einer zur Absättigung der Isocyanatgruppen unzureichenden Mengen bei einer unter dem Schmelzpunkt der Diamine liegenden Temperatur einverleibt und danach die Massen durch Wärmezufuhr ausgehärtet. Gemäß DE-PS 1 240 654 (U 3 428 610) werden die NCO-Gruppen haltigen Präpolymeren bei Raumtemperatur oder mäßig erhöhten Temperaturen mit solchen flüssigen oder gelösten aromatischen Diaminen umgesetzt, die in ortho-Stellung zur ersten Aminogruppe mindestens einen linearen Alkylsubstituenten und zur zweiten Aminogruppe zwei lineare Alkylsubstituenten mit 1 bis 3 C-Atomen aufweisen.

Ein Verfahren zur Herstellung von gegebenenfalls zellförmigen, elastischen Formkörpern mit einer geschlossenen Oberflächenschicht aus Polyurethan-Polyharnstoff-Elastomeren nach dem Prinzip der Reaktionsspritzgußtechnik wird in der DE-OS 2 622 951 (GB 1 534 258) beschrieben. Die genannten Systeme bestehen im wesentlichen aus organischen Polyisocyanaten, Polyolen, aktiven aromatischen Di- bzw. Polyaminen, die in O-Stellung zur Aminogruppe gegebenenfalls durch Alkylgruppen substituiert sind und starken Katalysatoren für die Reaktion zwischen Hydroxyl- und Isocyanatgruppen. Derartige Systeme besitzen Startzeiten bis herab zu weniger als einer Sekunde; der Übergang der flüssigen in die feste Phase erfolgt nahezu schlagartig, was dazu führt, daß das flüssige Reaktionsgemisch in der Form an deren Wandungen gleichsam erstarrt. Es ist bekannt, daß die Reaktivität von aromatisch gebundenen Aminogruppen gegenüber Isocyanaten durch elektronenanziehende Substituenten stark vermindert werden kann. Beispiele für derartige aromatische Diamine sind nach DE-PS 1 216 538 (GB-PS 981 935) 3,3'-Dichlor-4,4'-diamino-diphenylmethan, 3,3'-Dinitro-4,4'-dimanino-diphenylmethan und 3,3'-Dichlor-4,4'-diamino-diphenyl, deren Verarbeitung aus gesundheitsschädlichen Bedenken aufwendige und erschwerende Auflagen erfordert.

Aufgabe der vorliegenden Erfindung war es, Polyurethansysteme zu entwickeln, die insbesondere auch nach der Methode der Reaktionsspritzgußtechnik, im folgenden kurz »RIM« (reaction injection moulding) genannt, verarbeitet werden können. Die Systeme sollten im Vergleich zu bekannten eine etwas verminderte Reaktivität aufweisen, so daß sie auch bei einem relativ hohen Gehalt an aromatischen Diaminen eine ausreichende Fließfähigkeit besitzen. Die aromatische Diamine sollten ferner mit den Polyolen gut vermischbar sein. Die hergestellten Formkörper sollten eine hohe Wärmeformbeständigkeit aufweisen und keinen progressiven Abfall der Schubmodulkurven zwischen 100° und 200°C zeigen.

Die Aufgabe wurde gelöst durch ein Verfahren zur Herstellung von gegebenenfalls zellhaltigen Polyurethan-Polyharnstoff-Formkörpern durch Umsetzung von organischen gegebenenfalls Urethan-, Carbodiimidgruppen und/oder Isocyanuratringe enthaltenden Polyisocyanaten, Polyolen, Diamino-

diphenylmethanen sowie gegebenenfalls sek. aromatischen Diaminen, 3,3',5,5'-tetra-n-alkylsubstituierten 4,4'-Diamino-diphenylmethanen, Kettenverlängerungsmitteln mit Molekulargewichten kleiner als 400 aus der Gruppe der aliphatischen und/oder araliphatischen Diole, Triole und hydroxylgruppenhaltigen Polyalkylenoxide in Gegenwart von Katalysatoren und gegebenenfalls Treibmitteln, Hilfs- und Zusatzstoffen nach dem one-shot-Verfahren, das dadurch gekennzeichnet ist, daß man als Diamino-diphenylmethane Verbindungen der Formel

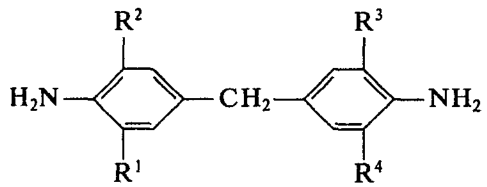

(I)

verwendet, in der $R^1$, $R^2$, $R^3$ und $R^4$ gleich oder verschieden sind und einen

—$CH_3$-, —$C_2H_5$-, 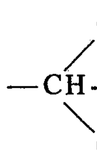 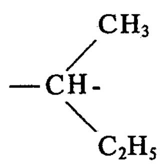 und —$C(CH_3)_3$-Rest

bedeuten, wobei jedoch mindestens einer der Reste ein

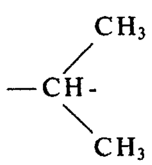 oder 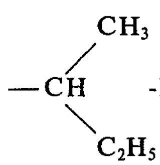 -Rest

sein muß.

In einer bevorzugten Ausführungsform werden die Diamino-diphenylmethane der Formel (I) im Gemisch mit Isomeren der Formeln

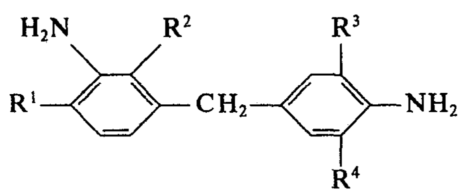

(II)

und/oder

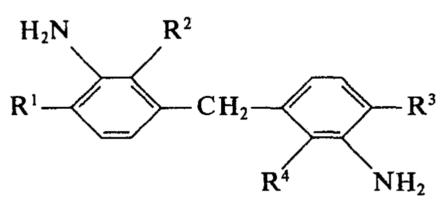

(III)

verwendet, wobei $R^1$, $R^2$, $R^3$ und $R^4$ die obengenannte Bedeutung haben.

Die erfindungsgemäße Verwendung der Diamino-diphenylmethane gemäß Formel (I) sowie insbesondere im Gemisch mit den Isomeren der Formeln (II) und/oder (III) zeigt folgende Vorteile:

Die Diamino-diphenylmethane sind viskose Flüssigkeiten mit geringer oder gar keiner Kristallisationsneigung;
sie sind sehr gut mit Polyolen, insbesondere Polyätherolen und Polyesterolen mischbar;
sie weisen eine verminderte Reaktivität auf und ergeben daher Systeme mit beachtlicher Fließfähigkeit auch bei hohen Diamino-diphenylmethangehalten. — Schußzeiten von 2 bis 4 Sekunden auf Hochdruck-Maschinen sind möglich. Die Verarbeitung erfolgt unter den für konventionelle RIM-Systeme üblichen Bedingungen. Besondere Vorkehrungen maschinentechnischer Art oder bezüglich der Handhabung sind nicht zu treffen.

Es ist ein weiterer Vorteil, daß zur Erreichung einer bestimmten Shore-Härte in Polyurethan-Polyharnstoff-Formkörpern für die Polyurethan-Formulierung nur geringe Polyisocyanatmengen benötigt werden. Da der Gewichtsanteil an Polyisocyanat relativ gering ist, können auch mit Mischungen aus Diphenylmethan-diisocyanaten und Polyphenyl-polymethylen-polyisocyanaten (Roh-MDI) und Roh-MDI-Präpolymeren Formkörper mit guten mechanischen Eigenschaften hergestellt werden. Die höhere Funktionalität von Roh-MDI macht sich praktisch nicht bemerkbar; ein Vorteil, der sich gravierend positiv auf die Wirtschaftlichkeit des erfindungsgemäßen Verfahrens auswirkt.

Die nach dem erfindungsgemäßen Verfahren mit Hilfe der RIM-Technik hergestellten Formkörper besitzen eine hohe Wärmeformbeständigkeit (für Materialien mit einer Shore D-Härte von 60 : 130° bis 140°C nach ISO-R-75, Methode B) und zeigen keinen progressiven Abfall der Schubmodulkurve zwischen 100° und 200°C.

Zu den für das erfindungsgemäße Verfahren verwendbare Ausgangskomponenten ist folgendes auszuführen:

Als Polyisocyanate kommen aliphatische, cycloaliphatische, araliphatische und vorzugsweise aromatische mehrwertige Isocyanate in Frage. Im einzelnen seien beispielhaft genannt: Alkylendiisocyanate mit 4 bis 12 Kohlenstoffatomen im Alkylenrest, wie 1,12-Dodecandiisocyanat, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat) 2,4- und 2,6-Hexahydrotoluylen-diisocyanat sowie entsprechende Isomerengemische, 4,4'-, 2,2'- und 2,4'-Di-cyclohexylmethan-diisocyanat sowie die entsprechenden Isomerengemische und vorzugsweise aromatische Di- und Polyisocyanate wie 4,4'-, 2,4'- und 2,2'-Diisocyanato-diphenylmethan und die entsprechenden Isomerengemische, 2,4- und 2,6-Diisocyanato-toluol und die entsprechenden Isomerengemische, 1,5-Diisocyanato-naphthalin, Polyphenyl-polymethylen-polyisocyanate, 2,4,6-Triisocyantato-toluol und vorzugsweise Gemische aus Diphenylmethan-diisocyanaten und Polyphenyl-polymethylen-polyisocyanaten (Roh-MDI).

Die genannten Di- und Polyisocyanate können einzeln oder in Form von Mischungen eingesetzt werden.

Häufig werden auch sogenannte modifizierte mehrwertige Isocyanate, d. h. Produkte die durch chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäß DE-PS 1 092 007, Allophanatgruppen aufweisende Polyisocyanate, wie sie z. B. in der britischen Patentschrift 994 890, den ausgelegten Unterlagen des belgischen Patents 761 626 und der NL-OS 7 102 524 beschrieben werden, Isocyanuratgruppen aufweisende Polyisocyanate wie sie z. B. in den DE-PS 1 022 789, 1 222 067 und 1 027 397 sowie den DE-OS 1 929 034 und 2 004 048 beschrieben werden, Urethangruppen aufweisende Polyisocyanate, wie sie z. B. in den ausgelegten Unterlagen des belgischen Patents 752 261 oder der US-PS 3 394 164 beschrieben werden, acylierte Harnstoffgruppen aufweisende Polyisocyanate z. B. gemäß DE-PS 1 230 778, Biurethangruppen aufweisende Polyisocyanate z. B. gemäß DE-PS 1 101 394 und GB-PS 889 050; durch Telomerisationsreaktionen hergestellte Polyisocyanate z. B. entsprechend den ausgelegten Unterlagen des belgischen Patents 723 640, Estergruppen aufweisende Polyisocyanate, wie sie z. B. in der GB-PS 965 474 und 1 072 956, der US-PS 3 567 765 und der DE-PS 1 231 688 genannt werden.

Vorzugsweise kommen jedoch zur Anwendung: urethangruppenhaltige Polyisocyanate, beispielsweise mit niedermolekularen Diolen, Triolen oder Polypropylenglykolen, modifiziertes 4,4'-Diphenylmethan-diisocyanat oder Toluylen-diisocyanat, Carbodiimidgruppen und/oder Isocyanuratringe enthaltende Polyisocyanate, z. B. Diphenylmethan-diisocyanat und/oder Toluylendiisocyanat-Basis und insbesondere Toluylendiisocyanate, Diphenylmethan-diisocyanate, Mischungen aus Di-phenylmethan-diisocyanaten und Polyphenyl-polymethylen-polyisocyanaten (Roh-MDI) und Gemische aus Toluylendiisocyanaten und Roh-MDI.

Als Polyole werden bei dem erfindungsgemäßen Verfahren vorzugsweise übliche lineare und/oder verzweigte, d. h. di- bis tetrafunktionelle, vorzugsweise di- und trifunktionelle Polyesterole und insbesondere Polyätherole mit Molekulargewichten von 1000 bis 8000 und vorzugsweise 2000 bis 7000, verwendet. In Betracht kommen jedoch auch andere hydroxylgruppenhaltige Polymere mit den genannten Molekulargewichten, beispielsweise Polyesteramide, Polyacetale, wie Polyoxymethylene und Butandiol-formale und Polycarbonate, insbesondere solche, hergestellt aus Diphenylcarbonat und Hexandiol-1,6 durch Umesterung.

Geeignete Polyesterole können beispielsweise aus Dicarbonsäure, vorzugsweise aliphatischen Dicarbonsäuren, mit 2 bis 12, vorzugsweise 4 bis 8 Kohlenstoffatomen im Alkylenrest und mehrwertigen Alkoholen, vorzugsweise Diolen hergestellt werden. Genannt seien beispielhaft aliphatische Dicarbonsäuren, wie Bernsteinsäure, Glutarsäure, Pimelinsäure, Undecandisäure, Dodecandisäure und vorzugsweise Adipinsäure und aromatische Dicarbonsäuren, wie Phthalsäure und Terephthalsäure. Beispiele für zwei- und mehrwertige, insbesondere zweiwertige Alkohole sind: 1,2- bzw. 1,3-Propylenglykol, Dipropylenglykol, 1,5-Pentandiol, 1,6-Hexamethylenglykol, Decandiol-1,10, Glycerin, Trimethylolpropan und vorzugsweise Äthylenglykol, Diäthylenglykol und 1,4-Butylenglykol. Als mehrwertige Alkohole können ferner Alkanolamine, wie Triäthanolamin und Triisopropanolamin verwendet werden.

Sofern zur Herstellung der Polyesterole polyfunktionelle, insbesondere trifunktionelle Verbindungen mitverwendet werden, muß deren Gehalt so gewählt werden, daß die Funktionalität der erhaltenen Polyesterole maximal 3,5, vorzugsweise 2 bis 3,0 ist.

Besonders bewährt haben sich und daher vorzugsweise verwendet werden solche Polyesterole, die durch Polykondensation eines Dicarbonsäuregemisches, das bezogen auf das Gesamtgewicht der genannten Dicarbonsäuren enthält: 20 bis 30 Gew.-%, vorzugsweise 28 bis 33 Gew.-% Bernsteinsäure, 35 bis 50 Gew.-%, vorzugsweise 40 bis 45 Gew.-% Glutarsäure und 20 bis 32 Gew.-%, vorzugsweise 24 bis 28 Gew.-% Adipinsäure und Alkoholmischungen aus Äthylenglykol/1,4-Butandiol, Äthylenglykol/Diäthylenglykol, Äthylenglykol/Trimethylolpropan, Diäthylenglykol/Trimethylolpropan, Äthylenglykol/Triisopropanolamin und Diäthylenglykol/Triisopropanolamin erhalten werden.

Die Polyesterole besitzen Molekulargewichte von 1000 bis 3000 und vorzugsweise 1800 bis 2500.

Vorzugsweise als Polyole verwendet werden jedoch Polyätherole, die nach bekannten Verfahren aus einem oder mehreren Alkylenoxiden mit 2 bis 4 Kohlenstoffatomen im Alkylenrest und einem Startermolekül, das 2 bis 8, vorzugsweise 2 bis 4 aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Äthylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-di-alkylsubstituierte Diamine mit 1 bis 4 Kohlenstoffatomen im Alkylrest, wie gegebenenfalls mono- und dialkylsubstituiertes Äthylendiamin, Diäthylentriamin, Triäthylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan. Von den Verbindungen der erwähnten Gruppe sind besonders interessant N,N,N',N'-Tetrakis-(2-hydroxyäthyl)-äthylendiamin, N,N,N',N'-Tetrakis-(2-hydroxypropyl)-äthylendiamin, N,N,N',N'',N''-Pentakis-(2-hydroxypropyl)-äthylentriamin, Phenyldiisopropanolamin und höhere Alkylenoxidaddukte von Anilin.

Als Startermoleküle kommen ferner in Betracht Alkanolamine, wie Äthanolamin, Diäthanolamin, N-Methyl- und N-Äthyl-äthanolamin, N-Methyl- und N-Äthyl-diäthanolamin und Triäthanolamin, Ammoniak, Hydrazin und Hydrazide. Vorzugsweise verwendet werden mehrwertige, insbesondere zwei- und/oder dreiwertige Alkohole, wie Äthylenglykol, Propylenglykol-1,2 und -1,3, Diäthylenglykol, Dipropylenglykol, Butylenglykol-1,4, Hexamethylenglykol-1,6, Glycerin, Trimethylol-propan und Pentaerythrit.

Andere anwendbare Polyole sind die nicht-reduzierenden Zucker, die nicht-reduzierenden Zuckerderivate und bevorzugt deren Alkylenoxid-Addukte, worin die Alkylenoxide 2 bis 4 Kohlenstoffatome haben. Verwendbare nicht-reduzierbare Zucker und Zuckerderivate sind z. B. Saccarose, Alkylglykoside, wie Methylglykosid und Äthylenglukosid, ferner Glykolglykoside, wie Äthylenglykolglukosid, Propylenglykolglukosid, Glyzeringlukosid und 1,2,6-Hexantriolglukosid.

In Betracht kommen ferner Polyole auf Basis von Polyphenolen und vorzugsweise deren Alkylenoxid-Addukte, in denen die Alkylenoxide 2 bis 4 Kohlenstoffatome besitzen. Anwendbare Polyphenole sind z. B. Bisphenol A, Bisphenol F, Kondensationsprodukte aus Phenol und Formaldehyd, besonders die Novolake, Kondensationsprodukte aus verschiedenen Phenolverbindungen und Acrolein, wobei die einfachsten Substanzen dieser Gruppe die 1,1,3-Tris-(hydroxyphenyl)-propane sind, Kondensationsprodukte verschiedener Phenolverbindungen mit Glyoxal, Glutaraldehyd und anderen Dialdehyden, wobei die einfachsten Substanzen dieser Gruppe die 1,1,2,2-Tetrakis-(hydroxy-phenyl)-äthane sind.

Eine weitere verwendbare Gruppe von Polyolen sind die Alkylenoxid-Addukte, vorzugsweise die Äthylenoxid-, 1,2-Epoxypropan-, Epoxybutan- und deren Mischungen, -Addukte von Kondensationsprodukten aus aromatischem Amin, Phenol und Aldehyd. Die Kondensationsprodukte erhält man durch Kondensieren eines aromatischen Amins, z. B. Anilin oder Toluidin, eines Phenols z. B. Phenol oder Kresol und eines Aldehyds, vorzugsweise Formaldehyd bei erhöhten Temperaturen, z. B. im Bereich von 60 bis 180°C. Das Kondensationsprodukt wird dann isoliert und unter Bildung der Polyole mit einem Alkylenoxid umgesetzt. Besonders erwähnenswert sind die Propylenoxid- und Propylen-Äthylenoxid-Addukte von Anilin/Phenol/Formaldehyd-Kondensationsprodukten.

Die Alkylenoxid-Addukte von Phosphor- und Polyphosphorsäuren sind eine weitere verwendbare Gruppe von Polyolen. Bevorzugte Alkylenoxide sind Äthylenoxid, 1,2-Epoxypropan, die Epoxybutane und 3-Chlor-1,2-epoxypropan. Als Phosphorsäuren sind Phosphorsäure, phosphorige Säure, die Polyphosphorsäuren, wie Tripolyphosphorsäure, und die Polymetaphosphorsäuren günstig.

Die Polyätherole besitzen Molekulargewichte von 2000 bis 8000 und vorzugsweise 2500 bis 7000. Sie können ebenso wie die Polyesterole einzeln oder in Form von Mischungen verwendet werden. Ferner können sie mit den Polyesterolen, und hydroxylgruppenhaltigen Polyesteramiden, Polyacetalen und Polycarbonaten gemischt werden.

Wie bereits dargelegt wurde, weisen die erfindungsgemäß verwendbaren Diaminodiphenylmethane Strukturen der Formel

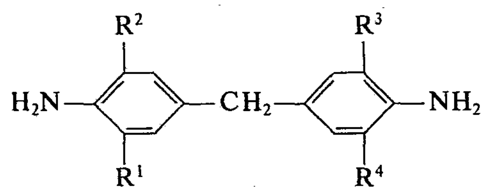

(I)

auf, in der $R^1$, $R^2$, $R^3$ und $R^4$ gleich oder verschieden sind und einen Methyl-, Äthyl-, Isopropyl-, sek- oder tert.-Butylrest bedeuten, wobei mindestens einer der Substituenten ein Isopropyl- oder sek.-Butylrest sein muß.

Beispielhaft genannt seien:

3,3',5-Trimethyl-5'-isopropyl-, 3,3',5-Triäthyl-5'-isopropyl-3,3',5-Trimethyl-5'-sek.-butyl-, 3,3',5-Triäthyl-5'-sek.-butyl-4,4'-diamino-diphenylmethan, 3,3'-Dimethyl-5,5'-diisopropyl-, 3,3'-Diäthyl-5,5'-diisopropyl-, 3,3'-Dimethyl-5,5'-di-sek.-butyl-, 3,3'-Diäthyl-5,5'-di-sek.-butyl-, 3,5-Dimethyl-3',5'-diisopropyl-, 3,5-Diäthyl-3',5'-diisopropyl-, 3,5'-Dimethyl-3',5-di-sek.-butyl-, 3,5-Diäthyl-3',5'-di-sek.-butyl-4,4'-diamino-di-phenylmethan, 3-Methan-3',5,5'-triisopropyl-, 3-Äthyl-3',5,5'-triisopropyl-, 3-Methyl-3',5,5'-tri-sek.-butyl-, 3-Äthyl-3',5,5'-tri-sek.-butyl-4,4'-diamino-diphenylmethan, 3,3'-Diisopropyl-5,5'-di-sek.-butyl-, 3,5-Diisopropyl-3',5'-di-sek.-butyl-, 3-Äthyl-5-sek.-butyl-3',5'-diisopropyl-, 3-Methyl-5-tert.-butyl-3',5'-diisopropyl-, 3-Äthyl-5-sek.-butyl-3'-methyl-5'-tert.-butyl-, 3,3',5,5'-Tetraisopropyl- und 3,3',5,5'-Tetra-sek.-butyl-4,4-diaminodiphenylmethan.

Vorzugsweise verwendet werden 3,5-Dimethyl-3',5'-diisopropyl- und 3,3',5,5'-Tetraisopropyl-4,4-diamino-diphenylmethan. Die Diamino-diphenylmethane können einzeln oder in Form von Mischungen eingesetzt werden.

Nach einer bevorzugten Ausführungsform werden Mischungen aus Diaminodiphenylmethanen der Formel (I) und den Isomeren der Formeln (II) und/oder (III) eingesetzt, wobei das Gewichtsverhältnis der Diaminodiphenylmethane der Formel (I) zu solchen der Formel (II) und/oder (III) von 60 : 40 bis 99,99 : 0,01, vorzugsweise 80 : 20 bis 95 : 5 variieren kann.

Die Diamino-diphenylmethane bzw. die Diamino-diphenylmethan-Isomeren-Mischungen kommen beim erfindungsgemäßen Verfahren vorzugsweise in Mengen von 2 bis 60 Gew.-%, insbesondere 10 bis 50 Gew.-%, bezogen auf das Gewicht der Polyole, zum Einsatz.

Als Katalysatoren werden insbesondere Verbindungen verwendet, die die Reaktion der Polyole und gegebenenfalls hydroxylgruppenhaltigen Kettenverlängerungsmittel mit den Polyisocyanaten stark beschleunigen. In Betracht kommen organische Metallverbindungen, vorzugsweise organische Zinnverbindungen, wie Zinn-(II)-salze von organischen Carbonsäuren, z. B. Zinn-(II)-acetat, Zinn-(II)-octoat, Zinn-(II)-äthylhexoat und Zinn-(II)-laurat und die Dialkylzinn-(IV)-salze von organischen Carbonsäuren, z. B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triäthylamin, Tributylamin, Dimethylbenzylamin, N-Methyl-, N-Äthyl-, N-Cyclohexylmorpholin, N,N,N',N'-Tetramethyläthylendiamin, N,N,N',N'-Tetramethyl-butandiamin, Pentamethyldiäthylentriamin, Tetramethyl-diaminoäthyläther, Bis-(dimethylaminopropyl)-harnstoff, Dimethylpiperazin, 1,2-Dimethylimidazol, 1-Azo-bicyclo-(3,3,0)-octan und vorzugsweise 1,4-Diaza-bicyclo-(2,2,2)-octan und Alkanolverbindungen, wie Triäthanolamin, Triisopropanolamin, N-Methyl- und N-Äthyl-diäthanolamin und Dimethyläthanolamin.

Als Katalysatoren kommen ferner in Betracht: Tris-(dialkylaminoalkyl)-s-hexahydrotriazine, insbesondere Tris-N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination, bezogen auf das Polyolgewicht.

Gegebenenfalls kann es auch zweckmäßig sein, insbesondere bei der Herstellung von zellhaltigen Polyurethan-Polyharnstoff-Formkörpern, die obengenannten Diamino-diphenylmethane teilweise durch Kettenverlängerungsmittel, sek.-aromatische Diamine und/oder 3,3',5,5'-tetra-n-alkylsubstituierte 4,4'-Diamino-diphenylmethane zu ersetzen. Die Kettenverlängerungsmittel besitzen vorteilhafterweise Molekulargewichte kleiner als 400, vorzugsweise von 30 bis 300 und weisen vorzugsweise zwei aktive Wasserstoffatome auf. In Betracht kommen beispielsweise aliphatische und/oder araliphatische Diole mit 2 bi 14, vorzugsweise 4 bis 10 Kohlenstoffatomen, wie Äthylenglykol, Propandiol-1,3, Decandiol-1,10, Diäthylenglykol, Dipropylenglykol und vorzugsweise Butandiol-1,4, Hexandiol-1,6 und Bis-(2-hydroxyäthyl)-hydrochinon, Triole, wie Glycerin und Trimethylolpropan und niedermolekulare hydroxylgruppenhaltige Polyalkylenoxide auf Basis Äthylen- und/oder Propylenoxid und den vorgenannten Startermolekülen.

Als sek.-aromatische Diamine seien beispielhaft genannt: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diäthyl-, N,N'-Di-sek.-pentyl-, N,N'-Di-sek.-hexyl-, N,N'-Di-sek.-decyl-, N,N'-Dicyclohexyl-p- bzw. m-phenylendiamin, N,N'-Dimethyl-, N,N'-Diäthyl-, N,N'-Diisopropyl, N,N'-Di-sek.-butyl-, N,N'-Dicyclohexyl-4,4'-diamino-diphenylmethan und N,N'-Di-sek.-butyl-benzidin.

Geeignete 3,3',5,5'-tetra-n-alkylsubstituierte 4,4'-Di-aminodiphenylmethane sind beispielsweise 3,3',5,5'-Tetramethyl-, -Tetraäthyl- und -Tetra-n-propyl-4,4'-diaminodiphenylmethan. Bewährt haben sich Mischungen aus den erfindungsgemäß verwendbaren Diamino-diphenylmethanen und den obengenannten Kettenverlängerungsmitteln, sek.-aromatischen Diaminen und/oder 3,3',5,5'-tetra-n-alkylsubstituierten 4,4'-Diamino-diphenylmethanen im Molverhältnis 75 : 25 bis 25 : 75, vorzugsweise ungefähr 50 : 50, entsprechend Gewichtsanteilen bezogen aufs Polyol von 2 bis 50 und insbesondere für zellhaltige Materialien von 2 bis 10.

Zu Treibmitteln, welche im erfindungsgemäßen Verfahren gegebenenfalls verwendet werden können, gehört Wasser, das mit Isocyanatgruppen unter Bildung von Kohlendioxid reagiert. Die Wassermengen, die zweckmäßigerweise verwendet werden können, betragen 0,1 bis 2%, bezogen auf das Gewicht an Polyisocyanat.

Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluoräthan und 1,1,2-Trichlor-1,2,2-trifluoräthan.

Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen Polyurethan-Polyharnstoff-Formkörper hängt ab von der Dichte, die man erreichen will sowie gegebenenfalls von der Mitverwendung von Wasser. Im allgemeinen liefern Mengen von 1 bis 15 Gew.-Teilen, bezogen auf 100 Gew.-Teile organisches Polyisocyanat, zufriedenstellende Ergebnisse.

Der Reaktionsmischung können gegebenenfalls auch noch Hilfs- und Zusatzstoffe einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z. B. ölsaures Diäthylamin oder stearinsaures Diäthanolamin, Salze von Sulfonsäuren, z. B. Alkali- oder Ammoniumsalze von Dodecylbenzol- oder Dinaphthylmethandi-sulfonsäure und Ricinolsäure; Schaumstabilisatoren, wie Siloxan-Oxalkylen-Mischpolymerisate und andere Organopolysiloxane, oxäthylierte Alkylphenole, oxäthylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteilen Polyol angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Scherspat und anorganische Pigmente, wie Cadmiumsulfid, Zinksulfid sowie Glas, Asbestmehl u. a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbet, Wollastonit und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und vorzugsweise Pfropfpolymerisate auf Styrol-Acrylnitrilbasis, die durch in situ Polymerisation von Acrylnitril-Styrol-Mischungen in Polyätherolen analog den Angaben der deutschen Patentschriften 1 111 394, 1 222 669, (US 3 304 273, 3 383 351, 3 523 093) 1 152 536 (GB 1 040 452) und 1 152 537 (GB 987 618) hergestellt werden sowie Fillerpolyole, bei denen wäßrige Polymerdispersionen in Polyoldispersionen übergeführt werden.

Die anorganischen und organischen Füllstoffe können einzeln oder als Gemische verwendet werden. Vorzugsweise Anwendung finden stabile Füllstoff-Polyol-Dispersionen, bei denen die Füllstoffe in Gegenwart von Polyolen in situ mit hohen örtlichen Energiedichten auf eine Teilchengröße kleiner als 7 μm zerkleinert und hierbei gleichzeitig dispergiert werden. Füllstoff-Polyol-Dispersionen dieser Art werden beispielsweise in den deutschen Patentanmeldungen P 2 850 609.4, P 2 850 610.7 und P 2 932 304.4

beschrieben.

Die anorganischen und organischen Füllstoffe werden der Reaktionsmischung vorteilhafterweise in Mengen von 0,5 bis 50 Gew.-%, vorzugsweise 1 bis 40 Gew.-%, bezogen auf das Gewicht der Polyisocyanat-Polyol-Mischung, einverleibt.

Geeignete Flammschutzmittel sind beispielsweise Trikresylphosphat, Tris-2-chloräthylphosphat, Tris-chlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat sowie Veresterungsprodukte niedermolekularer Polyole und halogenisierter Phthalsäurederivaten zum Flammfestmachen der Polyurethanschaumstoffe verwendet werden. Im allgemeinen hat es sich als zweckmäßig erwiesen, 5 bis 50 Gewichtsteile, vorzugsweise 5 bis 25 Gewichtsteile der genannten Flammschutzmittel für jeweils 100 Gewichtsteile an organischem Polyisocyanat zu verwenden.

Nähere Angaben über die obengenannten anderen üblichen Hilfs- und Zusatzstoffe sind der Fachliteratur, beispielsweise oder Monographie von J. H. Saunders und K. C. Frisch »High Polymers« Band XVI, Polyurethanes, Teil 1 und 2, Verlag Interscience Publishers 1962 bzw. 1964, zu entnehmen.

Zur Herstellung der gegebenenfalls zellhaltigen Polyurethan-Polyharnstoff-Formkörper werden die organischen Polyisocyanate, Polyole, Diaminodiphenylmethane und gegebenenfalls Kettenverlängerungsmittel, sek.-aromatische Diamine und 3,3',5,5'-tetra-n-alkylsubstituierte 4,4'-Diaminodiphenylmethane in solchen Mengen zur Umsetzung gebracht, daß das Verhältnis von NCO-Gruppen zu Zerewitinoff aktiven Wasserstoffatomen, gebunden an OH—, $-NH_2$ und —NHR-Gruppen 1 : 0,90 bis 1,25, vorzugsweise 1 : 0,95 bis 1,15 beträgt.

Die Herstellung der zellhaltigen und vorzugsweise kompakten Polyurethan-Polyharnstoff-Formkörper erfolgt im one-shot-Verfahren nach der bekannten Reaktionsspritzguß-Technik. Diese Verfahrensweise wird beispielsweise beschrieben von Piechota und Röhr in »Integralschaumstoff«, Carl-Hanser-Verlag, München, Wien 1975; D. J. Prepelka und J. L. Wharton in Journal of Cellular Plastics, März/April 1975, Seiten 87 bis 98 und U. Knipp in Journal of Cellular Plastics, März/April 1973, Seiten 76 bis 84. Die Formulierungen lassen sich jedoch auch zu Gießelastomeren und Integralschaumstoffe auf konventionelle Art verarbeiten.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen nach dem Zweikomponenten-Verfahren zu arbeiten und die Diamino-diphenylmethane in den Polyolen zu lösen und mit den Katalysatoren und gegebenenfalls Kettenverlängerungsmitteln, sek.-aromatischen Diaminen, 3,3',5,5'-tetra-n-alkylsubstituierten 4,4'-Diaminodiphenylmethanen, Treibmitteln, Hilfs- und Zusatzstoffen in der Komponente A zu vereinigen und als Komponente B die organischen Polyisocyanate zu verwenden. Vorteilhaft ist hierbei beispielsweise, daß die Komponenten A und B getrennt gelagert und raumsparend transportiert werden können und bei der Verarbeitung nur noch in den entsprechenden Mengen gemischt werden.

Die Menge des in die Form eingebrachten Reaktionsgemisches wird so bemessen, daß die erhaltenen kompakten Formkörper eine Dichte von 0,8 bis 1,4 $g/cm^3$, vorzugsweise von 0,9 bis 1,35 $g/cm^3$ und die zellhaltigen Formkörper eine Dichte von 0,1 bis 0,8 $g/cm^3$, vorzugsweise von 0,15 bis 0,6 $g/cm^3$ aufweisen. Die Ausgangskomponenten werden mit einer Temperatur von 15 bis 70°C, vorzugsweise von 20 bis 55°C in die Form eingebracht. Die Formtemperatur beträgt zweckmäßigerweise 20 bis 90°C, vorzugsweise 40 bis 85°C, gegebenenfalls kann es vorteilhaft sein übliche Formtrennmittel, beispielsweise auf Wachs- oder Silikonbasis, zur Verbesserung der Entformung, einzusetzen.

Die nach dem erfindungsgemäßen Verfahren erhältlich kompakten Polyurethan-Polyharnstoff-Formkörper eignen sich insbesondere zur Verwendung in der Automobilindustrie, beispielsweise als Stoßstangenabdeckungen und Karosserieteile wie Kotflügel, Spoiler und Radkästenverbreiterungen sowie technische Gehäuseteile, Schuhsohlen und Laufrollen, die zellhaltigen Schaumstoffe finden beispielsweise als Armlehnen, Kopfstützen, Sicherheitsabdeckungen im Automobilinnenraum sowie als Motorrad- und Fahrradsättel und Sitzkissen, Deckschichten in Verbundschaumstoffen Anwendung.

Die in den Beispielen genannten Teile beziehen sich auf das Gewicht.

Herstellung eines 3,3',5,5'-Tetraalkyl-4,4'-diaminodiphenylmethan-Gemisches, bestehend aus 95 Mol-% 3,3',5,5'-Tetraisopropyl-4,4'-diaminodiphenylmethan und insgesamt 5 Mol-% 3,5-Dimethyl-3',5'-diisopropyl-4,4-diaminodiphenylmethan und 3,3',5,5'-Tetramethyl-4,4'-diaminodiphenylmethan

In einem Emailkessel von 2200 l Inhalt legt man 152,5 kg techn. Salzsäure (27,3% HCl) und 650 l entionisiertes Wasser vor. Unter Rühren läßt man eine Mischung von 195 kg 2,6-Diisopropylanilin (1,101 Kmol) und 3,4 kg 2,6-Dimethylanilin (28,2 Mol) zulaufen. Nun erhitzt man auf 95°C und läßt unter gutem Rühren innerhalb von 30 min 57,0 kg Formaldehydlösung (30%ig) gleichmäßig einlaufen. Anschließend hält man die Mischung noch 30 min bei 95°C.

Nach Ablauf der Nachreaktionszeit von 30 min kühlt man auf 40°C ab und gibt 218 kg 21-proz. Natronlauge zu. Zuletzt läßt man 200 l Methyl-tert.-butyläther zufließen und rührt weitere 4 Stunden

bei 20 bis 30°C. Hierauf läßt man die Phasen sich abscheiden und trennt die untere Salzlösung ab. Die obere Schicht wird 2- bis 3mal mit je 150 l Wasser gewaschen.

Aus der gewaschenen organischen Lösung destilliert man den Methyl-tert.-butylester ab. Anschließend fraktioniert man unter vermindertem Druck, wobei neben Restmengen von Lösungsmittel noch etwa nicht umgesetztes Anilin und darin enthaltene Verunreinigungen überdestillieren. Das so erhaltene Rohprodukt destilliert man unter einem Druck von 0,5 bis 2 mbar bei einer Badtemperatur von 240 bis 260°C ab.

Ausbeute = 90% d. Theorie (= 205,88 kg).
Rückstand 6%.

## Beispiele RIM-Materialien

Die im folgenden beschriebenen Systemformulierungen wurden, wenn nicht anders vermerkt, mit Hochdruckdosieranlagen, in denen die Vermischung nach Art einer Gegenstromverdüsung erfolgt, nach dem RIM-Verfahren verarbeitet (Maschinen der Puromat- und Puromat SV-Serie von Elastogran Maschinenbau/Straßlach bei München).

Für die mechanischen Prüfungen wurden Platten mit verschiedenen Abmessungen (300 × 300 bis 1000 × 4 mm bzw. 600 × 600 × 4 mm) in temperierbaren, geschlossenen Plattenformen aus Stahl oder Aluminium hergestellt. Außerdem wurden Formteile wie Automobilkotflügel, Spoiler, Motorradkotflügel, Kotflügelverbreiterungsstreifen, Stoßfängerabdeckungen u. a. in Stahl-Aluminium- und Epoxidformen hergestellt. Die Befüllung der Formen erfolgt über Stangen-, Staubalken- oder Fächerangüsse mit gegebenenfalls integrierten Nachvermischungselementen. Die Schußgewichte variierten dabei von 350 bis ca. 5000 g.

Für größere Formteile müssen die Dosieranlagen eine hohe Austragsleistung besitzen (ca. 2 kg/sec. bei einem Formteil von ca. 5 kg Gewicht). Trotz der hohen Reaktivität der flüssigen Systemkomponenten war es aber auch möglich, Schußzeiten von 3 bis 4 sec zu realisieren.

Kleinere Platten und Formteile (100 g Gewicht) konnten auch mit Niederdruckdosieranlagen (z. B. EMB F 6 und F 20 ST der obengenannten Firma) hergestellt werden, wobei die Befüllung in die offene Form erfolgte. Dabei empfiehlt es sich, kleine Mischkammern mit teflonbeschichteten Oberflächen und ebensolchen Rührorganen zu verwenden.

## Beispiel 1a

| | |
|---|---|
| 80 Teile | eines Blockcopolyätherols auf Basis Trimethylolpropan-Propylenoxid-Äthylenoxid mit einer OH-Zahl von 25, |
| 20 Teile | einer Diaminmischung, hergestellt durch Formaldehydkondensation von 9,5 Mol 2,6-Diisopropylanilin und 0,5 Mol 2,6-Dimethylanilin, und |
| 0,20 Teile | Dibutylzinndilaurat werden zu einer Polyolkomponente vermischt |

und mit 26,7 bis 29,4 Teilen (entsprechend einem Index von 1,00 bis 1,10) eines Umsetzungsproduktes aus Dipropylenglykol und 4,4'-Diphenylmethandiisocyanat mit einem Isocyanatgehalt von 23,3% nach dem RIM-Verfahren mit einer Hochdruckdosieranlage vom Typ Puromat 50 verarbeitet.

Die Temperatur der Systemkomponenten beträgt 50°C, die Plattenform (500 × 300 × 4 mm) ist ebenfalls auf 50°C temperiert. Die Formstandzeit beträgt 30 sec; die Platten zeigen zu diesem Zeitpunkt beim Umbiegen um 180°C keine Rißbildung. Die Dichte der Platten beträgt 1,05 bis 1,08 g/cm$^3$. An den Testplatten wurden die in Tabelle 1 zusammengefaßten mechanischen Meßwerte ermittelt. Die Platten wurden nicht getempert.

## Beispiele 1b bis 1d

Die Polyolkomponenten werden entsprechend Beispiel 1a mit den in Tabelle 1 angegebenen Gewichtsteilen Diaminmischung hergestellt, wobei die Polyolmenge jeweils der Ergänzung zu 100 Gewichtsteilen entspricht.

Die mechanischen Eigenschaften der Platten sind in Tabelle 1 zusammengefaßt.

Tabelle 1

Physikalische Eigenschaften von RIM-Materialien hergestellt nach Beispiel 1a bis 1d

| Bei-spiel | Diamin | Mischungs-verhältnis[1]) | Index[2]) | Härte | Reiß-festigkeit | Reiß-dehnung | Weiter-reißfestig-keit[3]) | Schubmodul ($N/mm^2$) | | | | | Verhältnis |
|---|---|---|---|---|---|---|---|---|---|---|---|---|---|
| | (Gew.-% in Polyol-mischg.) | | | (Shore D) | ($N/mm^2$) | (%) | ($N/mm^2$) | −30° | 20° | 65° | 150° | 200° | −30°/65° |
| 1a | 20 | 26,7 | 1,00 | 34 | 17,8 | 577 | 35,7 | | | | | | |
| | 20 | 28,0 | 1,05 | 37 | 17,1 | 480 | 35,2 | | | | | | |
| | 20 | 29,4 | 1,10 | 39 | 13,1 | 418 | 35,8 | | | | | | |
| 1b | 25 | 31,2 | 1,00 | 46 | 23,2 | 482 | 48,7 | | | | | | |
| | 25 | 32,9 | 1,05 | 48 | 23,0 | 434 | 49,6 | | | | | | |
| | 25 | 34,4 | 1,10 | 49 | 23,5 | 401 | 51,3 | | | | | | |
| 1c | 35 | 42,1 | 1,05 | 61 | 28,4 | 382 | 83,1 | 530 | 200 | 105 | 35 | 35 | 5,05 |
| | 35 | 44,6 | 1,10 | 62 | 29,4 | 362 | 85,1 | 520 | 200 | 105 | 40 | 30 | 4,95 |
| 1d | 40 | 48,7 | 1,05 | 66 | 28,6 | 281 | 76,4 | 650 | 300 | 175 | 77 | 50 | 3,71 |

[1]) Gew.-Teile Isocyanat-Komponete : 100 Gew.-Teile Polyolmischung.
[2]) Verhältnis NCO : H-aktiven Verbindungen.
[3]) Nach Graves mit Einschnitt.

Beispiel 2

| | |
|---|---|
| 65 Teile | des in Beispiel 1a verwendeten Polyätherols mit einer OH-Zahl 25, |
| 35 Teile | einer Diaminmischung, hergestellt durch Formaldehydkondensation von 9,75 Mol Diisopropylanilin und 0,25 Mol 2,6-Dimethylanilin, und |
| 0,20 Teile | Dibutylzinndilaurat werden zu einer Polyolkomponente vereinigt |

und mit 35,8 bis 39,9 Teilen (entsprechend einem Index von 0,98 bis 1,10) einer Isocyanatmischung, bestehend aus 50 Teilen des in Beispiel 1a beschriebenen Isocyanatproduktes und 50 Teilen eines carbodiimidmodifizierten 4,4'-Diphenylmethandiisocyanats mit einem Isocyanatgehalt von 29,6%, nach dem RIM-Verfahren verarbeitet. Die Temperatur der Polyolkomponente beträgt 50°C, die der Isocyanatkomponente 23°C. Die Plattenform wird auf 50°C temperiert.

Die Prüfplatten (600 × 300 × 4 mm) wurden z. T. vergleichsweise getempert (1 Stunde bei 120°C). Die mechanischen Eigenschaften sind in Tabelle 2 zusammengefaßt, wobei ihnen Produkte hergestellt analog Beispiel 1c gegenübergestellt sind.

Tabelle 2

Physikalische Eigenschaften von RIM-Materialien, hergestellt nach Beispiel 1c und Beispiel 2

| Beispiel | Temperung (1 Std./ 120°C) | Mischungs-verhältnis[1]) | Index[2]) | Dichte ($g/cm^3$) | Härte (Shore D) | Reiß-festigkeit ($N/mm^2$) | Reißdehnung (%) quer | Reißdehnung (%) längs | Weiterreißfestigkeit (N/mm) Stab (ohne Einschnitt) | Weiterreißfestigkeit (N/mm) Graves (mit Einschnitt) |
|---|---|---|---|---|---|---|---|---|---|---|
| 1c | nein | 39,5 | 0,98 | 1,02 | 60 | 24,1 | 332 | | 25,3 | |
| | ja | 39,5 | 0,98 | 1,02 | 62 | 24,9 | 295 | | 26,4 | |
| 1c | nein | 40,5 | 1,00 | 1,02 | 61 | 23,8 | 324 | | 25,2 | |
| | ja | 40,5 | 1,00 | 1,03 | 62 | 24,4 | 304 | | 26,8 | |
| 1c | nein | 42,4 | 1,05 | 1,05 | 65 | 23,1 | 287 | 331 | 30,6 | 85,0 |
| | ja | 42,4 | 1,05 | 1,03 | 62 | 25,3 | 312 | 335 | 26,5 | 80,9 |
| 1c | nein | 44,8 | 1,10 | 1,04 | 61 | 26,3 | 323 | 327 | 28,0 | |
| | ja | 44,8 | 1,10 | 1,05 | 62 | 29,9 | 308 | 297 | 25,2 | |
| 2 | nein | 35,8 | 0,98 | 1,05 | 58 | 16,9 | 369 | | 28,3 | |
| | nein | 36,2 | 1,00 | 1,04 | 60 | 21,0 | | | 25,1 | |
| | nein | 38,0 | 1,05 | 1,04 | 61 | 22,8 | 302 | 304 | 23,8 | 77,7 |
| | ja | 38,0 | 1,05 | 1,04 | 63 | 26,2 | 304 | 281 | 25,3 | 80,2 |
| | nein | 39,9 | 1,10 | 1,03 | 64 | 23,7 | 274 | 298 | 23,7 | |

[1]) Gew.-Teile Isocyanatkomponente : 100 Gew.-Teile Polyolkomponente.
[2]) Verhältnis NCO : H-aktiven Verbindungen.

Fortsetzung

| Beispiel | Schlagbolzen-Versuch: Schädigungsarbeit (Nm) −20°C | Schlagbolzen-Versuch: Schädigungsarbeit (Nm) +23°C | Schädigungsverformung (mm) −20°C | Schädigungsverformung (mm) +23°C | Heat Sag (mm) 120°C, 1 h | Zugverformrest (%), 50°C, 24 h | Wärmeformbest. (°C) ISO-R-75 Methode B | Biege-E-Modul ($N/mm^2$) −30°C | Biege-E-Modul ($N/mm^2$) +23°C | Biege-E-Modul ($N/mm^2$) +65°C | Biege-E-Modul ($N/mm^2$) +120°C | Schubmodul ($N/mm^2$) −30°C | Schubmodul ($N/mm^2$) +23°C | Schubmodul ($N/mm^2$) +65°C | Schubmodul ($N/mm^2$) +120°C |
|---|---|---|---|---|---|---|---|---|---|---|---|---|---|---|---|
| 1c | 41,8 | 79,2 | 11,4 | 23,0 | <1 | 78 | 118 | | 531 | | | | | | |
| | 40,7 | 71,2 | 11,0 | 20,9 | <1 | 88 | 142 | | 529 | | | | | | |
| 1c | 42,6 | 86,2 | 11,6 | 24,5 | <1 | 74 | 124 | | 515 | | | | | | |
| | 42,1 | 105,1 | 11,3 | 27,7 | 1,4 | 82 | 139 | | 519 | | | | | | |
| 1c | 46,4 | 113,7 | 11,1 | 26,7 | 3,3 | 76 | 120 | 1170 | 592 | 391 | 211 | 460 | 170 | 104 | 63 |
| | 43,5 | 95,3 | 11,5 | 25,0 | <1 | 77 | 141 | 1070 | 569 | 384 | 205 | 400 | 170 | 101 | 69 |
| 1c | 45,9 | 121,5 | 11,0 | 30,5 | <1 | 91 | 116 | | 540 | | | | | | |
| | 47,1 | 102,3 | 11,0 | 26,9 | 1,2 | 84 | 144 | | 556 | | | | | | |
| 2 | 40,7 | 80,5 | 11,5 | 24,3 | <1 | 102 | 116 | | 472 | | | | | | |
| | 29,5 | 109,2 | 8,8 | 29,4 | <1 | 100 | 122 | | 505 | | | | | | |
| | 41,9 | 108,9 | 11,0 | 29,3 | 6,8 | 108 | 131 | 1040 | 556 | 391 | 211 | 400 | 160 | 96 | 73 |
| | 47,9 | 116,6 | 11,7 | 29,2 | <1 | 92 | 137 | 1050 | 564 | 401 | 216 | 400 | 180 | 118 | 79 |
| | 44,5 | 107,6 | 11,3 | 26,9 | 7,2 | 98 | 131 | | 535 | | | | | | |

Beispiel 3

| | |
|---|---|
| 65 Teile | des in Beispiel 1a verwendeten Polyätherols mit einer OH-Zahl 25, |
| 35 Teile | einer Isomerenmischung aus Tetraisopropyl-4,4'-diaminodiphenylmethan mit 85 Gew.-% 3,3'-5,5'-Tetraisopropyl-4,4'-diaminodiphenylmethan und jeweils ca. 7,5 Gew.-% 3,5,4',6'-Tetraisopropyl-4,5'-diaminodiphenylmethan bzw. 2,4,4',6'-Tetraisopropyl-3,5'-diaminodiphenylmethan und |
| 0,03 Teile | einer 33%igen Lösung von Diazabicyclooctan in Ethylenglykol sowie |
| 0,05 Teile | Dibutylzinndilaurat |

werden zu einer Polyolkomponente vermischt und mit 41,6 Teilen eines urethanmodifizierten 4,4'-Diphenylmethandiisocyanats entsprechend Beispiel 1a verarbeitet. Dazu wird eine Niederdruckmaschine des Typs EMB F 6 verwendet. Die Temperatur der Polyolkomponente beträgt 25°C, die der Isocyanatkomponente 19°C. Die Plattform (100 × 120 × 4 mm) wird auf 50° temperiert. Die erhaltenen Prüfplatten wurden 2 Stunden bei 100°C getempert und zeigten danach folgende Eigenschaften:

| | |
|---|---|
| Rohdichte | 1,0 $g/cm^3$ |
| Reißfestigkeit | 19,6 $N/mm^2$ |
| Reißdehnung | 235% |
| Weiterreißfestigkeit, Graves (mit Einschnitt) | 82,6 N/mm |
| Shore D | 57 |

Beispiele 4a und 4b

Fügt man den für Beispiel 1c beschriebenen Systemkomponenten jeweils 15 (Beispiel 4a) bzw. 30 Gew.-% (Beispiel 4b) gemahlene Kurzglasfasern hinzu, so erhält man nach der Verarbeitung mit entsprechenden füllstoffverarbeitenden Hochdruckdosieranlagen (z. B. Puromat 80 SV von Elastogran-Maschinenbau) Prüfplatten mit den in Tabelle 3 zusammengefaßten Eigenschaften. Das Raumgewicht der glasfaserverstärkten Materialien stieg bei 15% Glasfasern auf 1,15 $g/cm^3$ und bei 30% Glasfasern auf 1,28 $g/cm^3$.

Der lineare Schrumpf, der bei unverstärkten Platten 1,58% betrug, ging auf 1,10 bis 15% Glasfasern bzw. 0,58 bei 30% Glasfasern zurück.

Es wurden ebenfalls Formteile mit Gewichten bis 2 kg hergestellt, die eine ausgezeichnete, störstellenfreie Oberfläche aufweisen und ohne Vorbehandlung sehr gut lackiert werden konnten.

Tabelle 3

Physikalische Eigenschaften von RIM-Materialien, hergestellt nach Beispiel 4a und 4b

| Beispiel | Mischungsverhältnis[1]) | Glasfasergehalt | Härte | Reißfestigkeit | Reißdehnung | Weiterreißfestigkeit/ Stab[2]) | Schubmodul ($N/mm^2$) | | | | | Verhältnis |
|---|---|---|---|---|---|---|---|---|---|---|---|---|
| | | ( Gew.-%) | (Shore D) | ($N/mm^2$) | (%) | (N/mm) | –30° | 20° | 65° | 150° | 200° | –30°/65° |
| 4a | 43,0 | 15 | 62 | 21,0 | 278 | 28,7 | 800 | 320 | 175 | 77 | 75 | 4,57 |
| 4b | 43,0 | 30 | 70 | 24,0 | 35 | 32,3 | 1100 | 520 | 320 | 160 | 105 | 3,44 |

[1]) Gew.-Teile Isocyanatkomponente : 100 Gew.-Teile Polyolkomponente.
[2]) Ohne Einschnitt.

### Beispiel 5a

| | |
|---|---|
| 57,4 Teile | des in Beispiel 1a beschriebenen Polyätherols, |
| 42,5 Teile | einer Diaminmischung aus 50 Mol-% eines Isomerengemisches von Tetraisopropyl-4,4'-diaminodiphenylmethan gemäß Beispiel 3 und 50 Mol-% N,N'-Diisopropyl-4,4'-diaminodiphenylmethan |
| 0,04 Teile | einer 33%igen Lösung von Diazobicyclooctan in Ethylenglykol sowie |
| 0,06 Teile | Dibutylzinndilaurat |

werden zu einer Polyolkomponente vermischt und mit 54,5 Teilen des in Beispiel 1a beschriebenen urethanmodifizierten 4,4'-Diphenylmethandiisocyanats entsprechend Beispiel 3 verarbeitet. Die Temperatur beträgt in Abweichung dazu 31°C. Die Platten werden 2 Stunden bei 100°C getempert. Die Eigenschaften sind in Tabelle 4 zusammengefaßt.

Tabelle 4

Physikalische Eigenschaften von RIM-Materialien, hergestellt nach Beispiel 5a bis e und 6a bis b

| Beispiel | Reiß-festigkeit ($N/mm^2$) | Reiß-dehnung (%) | Weiterreiß-festigkeit (N/mm) | Härte (Shore D) | Schubmodul ($N/mm^2$) −30° | 20° | 65° | 150° |
|---|---|---|---|---|---|---|---|---|
| 5a | 19,4 | 202 | 83,6 | 67 | 500 | 230 | 120 | 10 |
| 5b | 20,5 | 210 | 83,3 | 68 | 450 | 255 | 160 | 5 |
| 5c | 21,9 | 210 | 87,0 | 67 | 570 | 300 | 180 | 45 |
| 5d | 26,6 | 299 | 77,6 | 64 | 600 | 245 | 150 | 40 |
| 5e | 23,2 | 289 | 81,7 | 61 | 510 | 210 | 110 | 25 |
| 6a | 23,9 | 234 | 98,2 | 63 | 740 | 355 | 135 | 6 |
| 6b | 25,3 | 209 | 104,1 | 70 | 900 | 430 | 150 | 4 |

### Beispiel 5b

Eine Polyolmischung mit einer gewichtsmäßigen Zusammensetzung analog Beispiel 5a, wobei jedoch als Diamin ein Gemisch aus 25 Mol-% der in Beispiel 3 beschriebenen Isomerenmischung und 75 Mol-% N,N'-Diisopropyl-4,4'-diaminodiphenylmethan verwendet wird, wird mit 58,0 Teilen des in Beispiel 1a verwendeten Isocyanats wie in Beispiel 5a verarbeitet. Die mechanischen Eigeschaftswerte finden sich in Tabelle 4.

### Beispiel 5c

In Abwandlung von Beispiel 5b wird eine Diaminmischung aus 75 Mol-% Isomerenmischung nach Beispiel 3 und 25 Mol-% N,N'-Diisopropyl-4,4'-diaminodiphenylmethan verwandt. Die eingesetzte Isocyanatmenge beträgt 51,5 Teile. Die Materialeigenschaften finden sich in Tabelle 4.

### Beispiel 5d

| | |
|---|---|
| 61,8 Teile | des in Beispiel 1a verwendeten Polyätherols der OH-Zahl 25, |
| 30,2 Teile | der in Beispiel 1a beschriebenen Diaminmischung, |
| 7,9 Teile | N,N'-Diisopropyl-4,4'-diaminodiphenylmethan, |
| 0,04 Teile | einer 33% Lösung von Diazabicyclooctan und |
| 0,06 Teile | Dibutylzinndilaurat werden zu einer Polyolkomponente vermischt |

und mit 48,0 Teilen der in Beispiel 1a beschriebenen Isocyanatkomponente mit Hilfe einer Hochdruckdosieranlage vom Typ Puromat 50 zu Platten der Abmessung 1000 × 300 × 4 mm verarbeitet.

Die Temperatur beider Komponenten beträgt 40°C, die der Form 50°C.
Die Eigenschaften der Testplatten finden sich in Tabelle 4.

Beispiel 5e

In Abwandlung von Beispiel 5d werden

| | |
|---|---|
| 66,8 Teile | Polyätherol, |
| 26,2 Teile | Diaminmischung gemäß Beispiel 1a und |
| 6,8 Teile | N,N'-Diisopropyl-4,4'-diaminodiphenylmethan eingesetzt und |

mit 43,1 Teilen Isocyanat gemäß Beispiel 1a verarbeitet. Mechanische Eigenschaften sind in Tabelle zusammengefaßt.

Beispiel 6a

| | |
|---|---|
| 72,1 Teile | des in Beispiel 1a genannten Polyätherols der OH-Zahl 25, |
| 9,7 Teile | Ethylenglykol, |
| 13,1 Teile | der in Beispiel 1a genannten Diaminmischung, |
| 3,4 Teile | N,N'-Diisopropyl-4,4'-diaminodiphenylmethan, |
| 1,6 Teile | Dichlormethan |
| 0,04 Teile | einer 33%igen Lösung von Diazabicyclooctan in Ethylenglykol und |
| 0,1 Teile | Dibutylzinndilaurat |

werden zu einer Polyolkomponente vermischt und mit 83,8 Teilen der Isocyanatkomponente gemäß Beispiel 1a mit Hilfe einer Hochdruckdosiermaschine nach Beispiel 5d zu Testplatten verarbeitet. Die Temperatur beider Komponenten beträgt 50°C.

Die Eigenschaften der Prüfplatten finden sich in Tabelle 4.

Beispiel 6b

| | |
|---|---|
| 69,3 Teile | des in Beispiel 1a genannten Polyätherols, |
| 13,2 Teile | Ethylenglykol, |
| 12,6 Teile | Diaminmischung gemäß Beispiel 1a, |
| 3,3 Teile | N,N'-Diisopropyl-4,4'-diaminodiphenylmethan, |
| 1,5 Teile | Dichlormethan, |
| 0,03 Teile | einer 33%igen Lösung von Diazabicyclooctan in Ethylenglykol sowie |
| 0,10 Teile | Dibutylzinndilaurat |

werden zu einer Polyolkomponente vermischt und mit 104 Teilen Isocyanatkomponente gemäß Beispiel 1 analog Beispiel 6a zu Testplatten verarbeitet.

Die an den Testplatten gemessenen physikalischen Eigeschaften sind in Tabelle 4 zusammengefaßt.

Beispiel 7a bis 7e

Beispiel 7a

| | |
|---|---|
| 80 Teile | des in Beispiel 1a verwendeten Polyätherols der OH-Zahl 25, |
| 20 Teile | der in Beispiel 1a verwendeten Diaminmischung, |
| 1,0 Teile | einer 33%igen Lösung von Diazabicyclooctan in Dipropylenglykol sowie |
| 0,2 Teile | Dibutylzinndilaurat |

werden zu einer Polyolkomponente vermischt und mit 22,5 bis 24,6 Teilen (entsprechend einem NCO : OH-Verhältnis (Index) von 1,00 bis 1,10) eines Umsetzungsproduktes von Diphenylmethandiisocyanat und Polyphenyl-polymethylen-polyisocyanaten (Roh-MDI) mit Propylenglykol und Oligopropylenglykolen (NCO-Gehalt: 28,6%) mittels einer Hochdruckdosieranlage gemäß den Verfahrensbedingungen in Beispiel 1a zu Testplatten verarbeitet.

Die Eigenschaften sind in Tabelle 5 zusammengefaßt.

Beispiele 7b bis 7e

Die Polyolkomponenten werden entsprechend Beispiel 7a mit den in Tabelle 5 angegebenen Gewichtsteilen Diaminmischung hergestellt, wobei die Polyolmenge jeweils der Ergänzung zu 100 Gew.-Teilen entspricht. Die Verarbeitung zu Testplatten wurde entsprechend Beispiel 1a vorgenommen. Anteile an urethanmodifizierte Roh-MDI gemäß Beispiel 7a sind in Tabelle 5 angegeben. Dort finden sich auch die mechanischen Eigenschaftswerte.

Tabelle 5

Physikalische Eigeschaften von RIM-Materialien, hergestellt nach Beispiel 7a bis 7c

| Beispiel | Diamin (Gew.-% in Polyolmischung | Mischungs-verhältnis¹) | Index²) | Härte (Shore D) | Reiß-festigkeit ($N/mm^2$) | Reiß-dehnung (%) | Weiterreiß-festigkeit³) (N/mm) |
|---|---|---|---|---|---|---|---|
| 7a | 20 | 22,5 | 1,00 | 36 | 13,0 | 437 | 25,2 |
| | 20 | 23,5 | 1,05 | 38 | 14,4 | 401 | 26,2 |
| | 20 | 24,6 | 1,10 | 42 | 15,9 | 381 | 28,4 |
| 7b | 27,5 | 26,2 | 0,92 | 44 | 17,9 | 501 | 46,3 |
| | 27,5 | 27,5 | 0,96 | 48 | 20,8 | 449 | 51,2 |
| | 27,5 | 28,8 | 1,01 | 52 | 23,8 | 383 | 52,9 |
| 7c | 35 | 34,2 | 1,00 | 59 | 22,4 | 356 | 74,6 |
| | 35 | 35,9 | 1,05 | 62 | 26,4 | 297 | 75,4 |
| | 35 | 37,6 | 1,10 | 62 | 28,1 | 266 | 74,4 |
| 7d | 40 | 37,3 | 1,00 | 63 | 26,8 | 313 | 57,4 |
| | 40 | 39,2 | 1,05 | 65 | 28,1 | 285 | 52,6 |
| | 40 | 41,0 | 1,10 | 66 | 30,1 | 278 | 46,9 |
| 7e | 45 | 42,9 | 1,05 | 68 | 28,2 | 244 | 24,9 |

¹) Gewichtsteile Isocyanatkomponente : 100 Gew.-Teilen Polyolkomponente.
²) Verhältnis NCO : OH.
³) Nach Graves, mit Einschnitt.

Beispiele 8a bis 8f

Beispiel 8a

| | |
|---|---|
| 75 Teile | eines Pfropfblockcopolyätherols auf Basis Trimethylolpropan-Propylenoxid-Äthylenoxid mit einem Pfropfanteil von 20 Gew.-%, bestehend aus einem Copolymerisat aus Styrol und Acrylnitril im Gewichtsverhältnis 60 : 40 und einer OH-Zahl von 28, |
| 25 Teile | des in Beispiel 1a angegebenen Diamingemisches, |
| 1,0 Teile | einer 33%igen Lösung von Diazabicyclooctan in Dipropylenglykol und |
| 0,2 Teile | Dibutylzinndilaurat |

werden zu einer Polyolkomponente vermischt und mit 27,2 bis 29,9 Teilen des in Beispiel 7a beschriebenen, urethanmodifizierten Roh-MDI unter den in Beispiel 1a angegebenen Bedingungen zu Testplatten verarbeitet. Die Formstandzeit beträgt 15 sec; die Platten zeigen nach 20 sec beim Umbiegen um 180°C keine Rißbildung.

Die ermittelten mechanischen Eigenschaften sind in Tabelle 6 zusammengefaßt.

Beispiele 8b und 8c

Die Polyolkomponenten werden entsprechend Beispiel 8a mit den in Tabelle 6 angegebenen Gewichtsteilen Diaminmischung hergestellt, wobei die Polyolmenge jeweils der Ergänzung zu 100 Gewichtsteilen entspricht. Die Verarbeitung zu Testplatten wurde ebenfalls wie in Beispiel 8a durchgeführt. Die eingesetzten Isocyanatanteile sind in Tabelle 6 aufgeführt.

Beispiele 8d und 8e

Anstelle des in den Beispielen 8a bis 8c verwendeten Pfropfpolyols wird eine Melamin-Polyätheroldispersion verwendet, die 50 Gew.-% Melamin sowie 2 Gew.-% pyrogene Kieselsäure (Aerosil® 200, der Degussa) enthält und durch Naßvermahlung von Melaminpulver in einem Blockcopolyätherol auf Basis Glycerin-Propylenoxid-Äthylenoxid mit der OH-Zahl 35 hergestellt wurde. Die Gewichtsteile Diamingemisch Isocyanatkomponente sowie die Verarbeitungsbedingungen sind sinngemäß von Beispiel 8a zu übertragen. Die Ergebnisse sind in Tabelle 6 enthalten.

Beispiel 8f

Anstelle des in den Beispielen 8a bis 8c verwendeten Pfropfpolyols wird eine Dispersion von 15 Gew.-% gefälltem Aluminiumsilikats in einem Blockcopolyätherol auf Basis Glycerin-Propylenoxid-Äthylenoxid mit der OH-Zahl 35 eingesetzt, die durch Naßvermahlung hergestellt wurde. Die Gewichtsteile Diamingemisch und Isocyanatkomponente sowie die Verarbeitungsbedingungen sind sinngemäß von Beispiel 8a zu übertragen (vgl. Tabelle 6).

Obwohl die Polyoldispersion 0,25% Wasser enthält, wurde überraschenderweise keinerlei Schäumreaktion bei der Verarbeitung festgestellt; die hergestellten Testplatten wiesen eine Dichte von 1,1 g/cm$^3$ auf. Die mechanischen Eigenschaften der erhaltenen Formteile sind in Tabelle 6 genannt.

Tabelle 6

Physikalische Eigenschaften von RIM-Materialien, hergestellt nach Beispielen 8a bis 8f

| Beispiel | Diamin | Mischungsverhältnis[1]) | Index | Füllstoff | | Härte | Reißfestigkeit | Reißdehnung | Weiterreißfestigkeit/ Graves |
|---|---|---|---|---|---|---|---|---|---|
| | (Gew.-% in Polyolmischung) | | | Typ | (Gew.-%) | (Shore D) | ($N/mm^2$) | (%) | (N/mm) |
| 8a | 25 | 27,2 | 1,00 | Styrol/Acrylnitril | 11,6 | 56 | 23,0 | 272 | 55,3 |
| | 25 | 28,5 | 1,05 | Styrol/Acrylnitril | 11,5 | 57 | 25,0 | 275 | 59,5 |
| | 25 | 29,9 | 1,10 | Styrol/Acrylnitril | 11,4 | 58 | 25,5 | 245 | 58,6 |
| 8b | 35 | 34,6 | 1,00 | Styrol/Acrylnitril | 9,5 | 68 | 30,8 | 223 | 43,7 |
| | 35 | 36,3 | 1,05 | Styrol/Acrylnitril | 9,4 | 70 | 31,2 | 208 | 37,9 |
| | 35 | 38,1 | 1,10 | Styrol/Acrylnitril | 9,2 | 70 | 32,6 | 198 | 33,7 |
| 8c | 45 | 44,2 | 1,05 | Styrol/Acrylnitril | 7,5 | 75 | 31,3 | 109 | 15,5 |
| 8d | 20 | 22,3 | 1,00 | Melamin | 12,9 | 48 | 16,4 | 364 | 41,3 |
| | 20 | 23,4 | 1,05 | Melamin | 12,8 | 55 | 19,1 | 255 | 48,6 |
| | 20 | 24,5 | 1,10 | Melamin | 12,7 | 56 | 19,5 | 244 | 52,3 |
| 8e | 35 | 33,7 | 1,00 | Melamin | 9,4 | 68 | 24,3 | 290 | 81,6 |
| | 35 | 35,4 | 1,05 | Melamin | 9,2 | 69 | 27,1 | 254 | 75,6 |
| | 35 | 37,1 | 1,10 | Melamin | 9,2 | 70 | 27,7 | 233 | 65,7 |

Fortsetzung

| Beispiel | Diamin | Mischungs-verhältnis[1]) | Index | Füllstoff | | Härte | Reiß-festigkeit | Reiß-dehnung | Weiterreiß-festigkeit/ Graves |
|---|---|---|---|---|---|---|---|---|---|
| | (Gew.-% in Polyol-mischung) | | | Typ | (Gew.-%) | (Shore D) | ($N/mm^2$) | (%) | (N/mm) |
| 8f | 35 | 35,1 | 1,00 | gefälltes Al-Silikat | 7,1 | 67 | 22,5 | 226 | 54,6 |
| | 35 | 36,9 | 1,05 | gefälltes Al-Silikat | 7,0 | 68 | 24,0 | 193 | 47,4 |
| | 35 | 38,6 | 1,10 | gefälltes Al-Silikat | 6,9 | 69 | 28,0 | 188 | 41,0 |

[1]) Gewichtsteile Isocyanatkomponente : 100 Gew.-Teilen Polyolkomponente.

Beispiel 9a

Die in Beispiel 1d beschriebene Polyolkomponente wird mit zusätzlich 0,1 Teil Dibutylzinndilaurat versetzt und mit 23,5 Teilen eines Isomerengemisches aus 80% 2,4-Toluylendiisocyanat und 20% 2,6-Toluylendiisocyanat unter den in Beispiel 1a angegebenen Bedingungen verarbeitet.
Die Formstandzeit beträgt 120 sec; danach werden die Platten 1 Stunde bei 120°C getempert. Sie besitzen danach eine Härte von 52 Shore D, das Raumgewicht beträgt 1,1 g/$cm^3$.

Beispiel 9b

Die in Beispiel 1d beschriebene Polyolkomponente wird mit 0,1 Teil Dibutylzinndilaurat versetzt und mit 50 Teilen eines Umsetzungsproduktes hergestellt, aus 50 Teilen eines Isomerengemisches von 80% 2,4-Toluylendiisocyanat und 20% 2,6-Toluylendiisocyanat mit 50 Teilen eines Blockcopolyätherol auf Basis Glycerin-Propylenoxid-Äthylenoxid mit der OH-Zahl 25, unter den in Beispiel 1a angegebenen Bedingungen verarbeitet. Der NCO-Gehalt der Isocyanatkomponente beträgt 22,9%.
Die Shore-D-Härte der Testplatten beträgt 47 bei einem Raumgewicht von 1,1 g/$cm^3$.
Fügt man der verwendeten Polyolkomponente 3 Teile 1,1,2-Trifluor-1,2,2-trichloräthan hinzu, so lassen sich Platten mit einem Raumgewicht von 0,9 g/$cm^3$ und einer Shore-D-Härte von 42 herstellen.

Weichintegralschäume

Vergleichsbeispiel

Die Zusammensetzung enthält Tabelle 7; die Verarbeitung erfolgte mit Hilfe einer Niederdruckmaschine vom Typ EMB F 20 ST zu Prüfplatten von 10 und 40 mm Dicke; die mechanischen Eigenschaften sind in Tabelle 8 zusammengefaßt.
In Tabelle 9 sind die besonderen Verarbeitungsmerkmale von hergestellten Formteilen zusammengestellt. Besonders hervorzuheben ist der überraschende Befund, daß Teile aus den angegebenen Systemformulierungen im Gegensatz zum Vergleichsbeispiel bei niedrigerer Formtemperatur und kürzerer Formstandzeit hergestellt werden können, ohne zu schrumpfen.

Tabelle 7

Weichintegralschaum-Systeme auf Basis aromatischer Diamine als Kettenverlängerungsmittel und Fillerpolyole als Zellöffner (Prüfplatten-Rohdichte: 0,40 g/$cm^3$)

| | Beispiel-Nr. | | | | |
|---|---|---|---|---|---|
| | Vergleichsbeispiel | 10a | 10b | 10c | 10d |
| Polyol A[1]) | 55,47 | 54,165 | 49,14 | 39,71 | 29,74 |
| Polyol B[2]) | 23,73 | 23,214 | 21,06 | 21,66 | 21,36 |
| Fillerpolyol[3]) | – | – | – | 10,83 | 20,0 |
| Butandiol-1,4 | 5,54 | 4,986 | 2,77 | 2,77 | 2,77 |
| 3,3',5,5'-Tetraisopropyl-4,4'-diaminodiphenylmethan | – | 2,255 | 4,44 | 4,44 | 4,44 |
| N,N'-Diisopropyl-4,4'-diaminodiphenylmethan | – | – | 5,21 | 5,21 | 5,21 |
| 33% Diaza-2,2,2-bicyclo-octan in Dipropylenglykol | 1,11 | 1,11 | 1,11 | 1,11 | 1,11 |
| Dibutylzinndilaurat | 0,015 | 0,015 | 0,015 | 0,015 | 0,015 |
| Schwarzpaste N | 3,955 | 3,955 | 3,955 | 3,955 | 3,955 |

Fortsetzung

| | Beispiel-Nr. Vergleichs-beispiel | 10a | 10b | 10c | 10d |
|---|---|---|---|---|---|
| Trichlorfluormethan | 10,3 | 12,3 | 12,3 | 12,3 | 12,3 |
| Isocyanat-Komponente[4]) | id | id | id | id | id |
| MV[5]) | 27–29 | 27–29 | 28–30 | 27–29 | 29–31 |
| Startz./Steigz./Raumgewicht (sec/sec/kg/$m^3$) | 13/50/138 | 10/30/200 | 6/30/140 | 7/36/143 | 7/30/165 |
| Formtemperatur (°C) | 50 | 45 | 45 | 45 | 45 |
| Entformzeit (min) | 5 | 3 | 3 | 3–5 | 3–5 |

[1]) Blockcopolyätherol auf Basis Dipropylenglykol-Propylenoxid-Äthylenoxid mit der OH-Zahl 29.
[2]) Blockcopolyätherol auf Basis Trimethylolpropan-Propylenoxid-Äthylenoxid mit der OH-Zahl 25.
[3]) Basispolyol wie [1]) Füllstoffgehalt : 20 Gew.-% gefälltes Aluminiumsilikat $H_2O$ : 0,66%.
[4]) Isocyanatkomponente gemäß Beispiel 2.
[5]) Gew.-Teile Isocyanatkomponente : 100 Gew.-Teilen Polyolkomponente (XB : 100A).

Tabelle 8

Weichintegralschaum mit aromatischen Diaminen und gefälltem Aluminiumsilikat als Zellöffner

| Beispiele | MV xB : 100A | Reißfestigkeit ($N/mm^2$) | Reißdehnung (%) | Weiterreißfestigkeit (N/mm) |
|---|---|---|---|---|
| Vergleichsbeispiel | 27,1 | 1,0 | 320 | 5,2 |
| | 28,2 | 1,3 | 390 | 5,1 |
| | 29,1 | 1,4 | 354 | 4,7 |
| | 30,4 | 1,3 | 318 | 4,0 |
| 10a | 26,3 | 1,3 | 377 | 5,7 |
| | 26,9 | 1,4 | 394 | 5,5 |
| | 28,2 | 1,5 | 384 | 6,2 |
| | 29,0 | 1,4 | 302 | 5,5 |
| 10b | 26,8 | 1,6 | 492 | 5,5 |
| | 28,1 | 1,9 | 434 | 6,4 |
| | 28,9 | 1,6 | 306 | 6,1 |
| | 30,2 | 1,9 | 316 | 5,7 |

Fortsetzung

| Beispiele | MV<br>xB : 100A | Reißfestigkeit<br>($N/mm^2$) | Reißdehnung<br>(%) | Weiterreißfestigkeit<br>(N/mm) |
|---|---|---|---|---|
| 10c | 27,1 | 1,4 | 442 | 6,0 |
| | 27,9 | 1,6 | 382 | 6,0 |
| | 28,9 | 1,5 | 330 | 5,5 |
| 10d | 28,9 | 1,9 | 380 | 6,2 |
| | 30,0 | 2,0 | 364 | 6,7 |
| | 30,8 | 1,9 | 292 | 6,1 |

Fortsetzung

| Beispiele | Härte | Stauchhärte bei Stauchung | | | Druckverform.rest (50%) | |
|---|---|---|---|---|---|---|
| | (Shore D) | 20%<br>($N/cm^2$) | 40% | 60% | 70 h/20° | 22 h/70° |
| Vergleichsbeispiel | 20 | 3,4 | 7,1 | 23,7 | 3,8 | 41,6 |
| | 25 | 4,6 | 8,3 | 27,4 | 3,8 | 42,7 |
| | 27 | 6,1 | 10,2 | 35,4 | 3,2 | 41,8 |
| | 26 | 7,2 | 11,3 | 37,1 | 2,4 | 40,3 |
| 10a | 24 | 3,7 | 6,7 | 19,5 | 3,6 | 45,0 |
| | 25 | 3,7 | 7,1 | 21,0 | 3,5 | 44,0 |
| | 26 | 4,2 | 6,8 | 24,7 | 2,7 | 44,1 |
| | 28 | 4,7 | 8,7 | 26,7 | 2,7 | 43,1 |
| 10b | 17 | 2,5 | 5,8 | 20,4 | 32,9 | 44,7 |
| | 22 | 2,7 | 5,3 | 21,2 | 16,6 | 47,1 |
| | 27 | 4,2 | 7,7 | 21,6 | 6,5 | 47,2 |
| | 30 | 6,0 | 10,2 | 25,2 | 4,6 | 46,4 |
| 10c | 18 | 1,9 | 3,6 | 10,5 | 34,1 | 48,6 |
| | 27 | 4,5 | 8,2 | 32,2 | 18,5 | 47,1 |
| | 29 | 7,2 | 11,9 | 45,1 | 6,3 | 45,0 |
| 10d | 32 | 4,3 | 8,6 | 23,4 | 13,2 | 46,9 |
| | 36 | 5,1 | 10,3 | 29,2 | 7,4 | 46,1 |
| | 38 | 5,8 | 10,1 | 23,4 | 5,3 | 45,3 |

Tabelle 9

Formteile (Möbel-Armlehne, Epoxidwerkzeug) aus Weichintegralschaumsystemen auf Basis aromatischer Diamine

| Beispiele | MV | Rohdichte | Form-temp. | Ent-formzeit | Bemerkungen |
|---|---|---|---|---|---|
| | XB : 100A | (kg/m$^3$) | (°C) | (min) | |
| Vergleichsbeispiel | 28,2 | 380 | 50 | 5 | aufgestochen, schrumpft |
| 10a | 28 | 390 | 45 | 3 | nicht aufgestochen, schrumpffrei |
| 10b | 29 | 370 | RT | 2 | aufgestochen, schrumpffrei |
| 10b + 3 Tle. Trichlormormethan | 27 | 250 | 45 | 4 | aufgestochen, schrumpffrei |
| 10c | 27 | 340 | 45 | 3 | nicht aufgestochen, schrumpffrei |
| 10d | 29 | 290 | RT | 3 | nicht aufgestochen, schrumpffrei |
| 10d + 0,02 Tle. Dibutylzinndilaurat | 30 | 190 (40-mm-Platte) | 45 | 2 | nicht aufgestochen, schrumpffrei |

Transparente RIM-Elastomere

Beispiel 11a

Polyolkomponente: Mischung aus:

| | |
|---|---|
| 83,3 Teilen | Polyesterol mit einer OH-Zahl von 56, hergestellt aus Adipinsäure und einer Diolmischung aus 50 Gew.-% Pentandiol, 25 Gew.-% Butandiol und 25 Gew.-% Hexandiol, Gew.-% bezogen auf das Gewicht der Diolmischung, |
| 14,2 Teilen | 3,3',5,5'-Tetra-isopropyl-4,4'-diaminodiphenylmethan |
| 1,5 Teilen | Diaza-(2,2,2)-bicyclooctan, 33%ig in Dipropylenglykol |
| 0,253 Teilen | ®Irganox 1010 (Antioxidants der Firma Ciba-Geigy, Basel) |
| 0,421 Teilen | ®Tinuvin 770 |
| 0,421 Teilen | ®Tinuvin R (UV-Stabilisatoren der Firma Ciba-Geigy, Basel) |

Isocyanatkomponente: Umsetzungsprodukt aus 30 Teilen eines Polyesterols mit der OH-Zahl von 104 aus Adipinsäure und der obengenannten Diolmischung und einer Isomerenmischung aus 2,4- und 2,6-Toluylen-diisocyanat (Gew.-Verhältnis 80 : 20). Der NCO-Gehalt des Umsetzungsproduktes beträgt 5,9%.

Beispiel 11b

Polyolkomponente: Mischung aus:

| | |
|---|---|
| 86,4 Teilen | Polyesterol mit einer OH-Zahl von 56, hergestellt aus Adipinsäure und einer Diolmischung aus 50 Gew.-% Pentandiol, 25 Gew.-% Butandiol und 25 Gew.-% Hexandiol, Gew.-% bezogen auf das Gewicht der Diolmischung, |
| 7,1 Teilen | 3,3',5,5'-Tetraisopropyl-4,4'-diamino-diphenylmethan |
| 5,0 Teilen | 3,3',5,5'-Tetramethyl-4,4'-diaminodiphenylmethan |
| 1,5 Teilen | Diaza-(2,2,2)-bicyclooctan, 33%ig in Dipropylenglykol |
| 0,253 Teilen | ®Irganox 1010 (Antioxidants der Firma Ciba-Geigy, Basel) |
| 0,421 Teilen | ®Tinuvin 770 |
| 0,421 Teilen | ®Tinuvin R (UV-Stabilisatoren der Firma Ciba-Geigy, Basel) |

Isocyanatkomponente: Umsetzungsprodukt aus 30 Teilen eines Polyesterols mit der OH-Zahl von 104 aus Adipinsäure und der obengenannten Diolmischung und einer Isomerenmischung aus 2,4- und 2,6-Toluylen-diisocyanat (Gewichtsverhältnis 80 : 20). Der NCO-Gehalt des Umsetzungsprodukts beträgt 5,9%.

Die Formulierungen der Beispiele 11a und 11b wurden jeweils mit 0,1% Farbstoff (®Neozapon der BASF) und 0,15% Pigment (®Iriodin TI 100, Perlglanzpigment der Firma Merck auf Basis $TiO_2$-beschichteter Glimmerblättchen) berechnet auf die beiden Komponenten, eingefärbt.

Die Verarbeitung erfolgte mit einer Niederdruckdosieranlage vom Typ EMB F 20 ST.

Die Temperatur der Polyolkomponente betrug 40°C, die der Isocyanatkomponente 65°C. Die Formtemperatur war auf 80° bis 85°C eingestellt.

Die Mischungsverhältnisse und mechanischen Eigenschaften sind in Tabelle 11 zusammengefaßt.

Tabelle 10

Physikalische Eigenschaften von Polyurethan-Transparentsystemen (Dichte ca. 1,0 $g/cm^3$)

| Beispiel | Misch.-verhält.[1]) | Zugversuch (DIN 53 504) | | Weiterreiß-festigkeit | Härte | Abrieb nach DIN 53 516 |
|---|---|---|---|---|---|---|
| | | Reißfestigkeit ($N/mm^2$) | Bruchdehnung (%) | (N/mm) (DIN 53 507) | (Shore A) | (mg) |
| 11a | 125,7 | 17,6 | 650 | 17,7 | 67 | 64 |
| | 129,3 | 17,8 | 606 | 13,1 | 68 | 57 |
| | 132,2 | 19,6 | 595 | 12,2 | 71 | 49 |
| 11b | 128,1 | 26,6 | 623 | 18,4 | 73 | 57 |
| | 131,3 | 25,8 | 596 | 16,4 | 72 | 57 |
| | 134,2 | 23,2 | 622 | 16,7 | 71 | 58 |

[1]) Gew.-Teile Isocyanatkomponente: 100 Gew.-Teilen Polyolkomponente.

**Patentansprüche**

1. Verfahren zur Herstellung von gegebenenfalls zellhaltigen Polyurethan-Polyharnstoff-Formkörpern durch Umsetzung von organischen, gegebenenfalls Urethan-, Carbodiimidgruppen und/oder Isocyanuratringe enthaltenden Polyisocyanaten, Polyolen, Diamino-diphenylmethanen sowie gegebenenfalls sek.-aromatischen Diaminen, 3,3',5,5'-tetra-n-alkylsubstituierten 4,4'-Diamino-diphenylmethanen, Kettenverlängerungsmitteln mit Molekulargewichten kleiner als 400 aus der Gruppe der aliphatischen und/oder araliphatischen Diole, Triole und hydroxylgruppenhaltigen Polyalkylenoxide in Gegenwart von Katalysatoren und gegebenenfalls Treibmitteln, Hilfs- und Zusatzstoffen nach dem one-shot-Verfahren, dadurch gekennzeichnet, daß man als Diamino-diphenylmethane Verbindungen der Formel

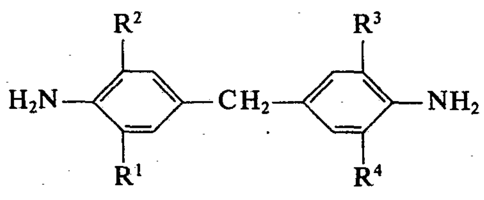

(I)

verwendet, in der $R^1$, $R^2$, $R^3$ und $R^4$ gleich oder verschieden sind und einen

$—CH_3$-, $—C_2H_5$-, 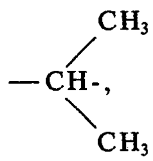 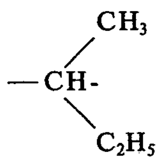 und $—C(CH_3)_3$-Rest

bedeuten, wobei jedoch mindestens einer der Reste

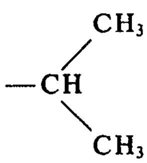 oder 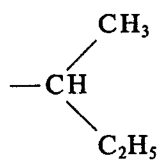

sein muß.

2. Verfahren nach Anspruch 1, dadurch gekennzeichnet, daß man als Diamino-diphenylmethane Verbindungen der Formel (I) im Gemisch mit Isomeren der Formeln

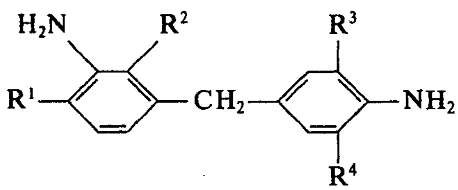

(II)

und/oder

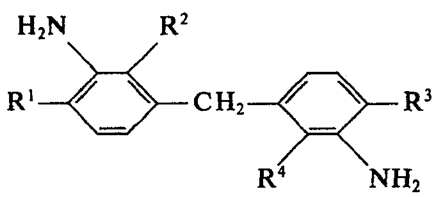

(III)

verwendet, wobei $R^1$, $R^2$, $R^3$ und $R^4$ die obengenannte Bedeutung haben.

3. Verfahren nach Ansprüchen 1 und 2, dadurch gekennzeichnet, daß die Diamino-diphenylmethane der Formel (I) und Formeln (II) und/oder (III) im Gemisch im Gewichtsverhältnis 60 : 40 bis 99,99 : 0,01 vorliegen.

4. Verfahren nach Ansprüchen 1 bis 3, dadurch gekennzeichnet, daß die organischen Polyisocyanate, Polyole, Diamino-diphenylmethane, Katalysatoren sowie gegebenenfalls Kettenverlängerungsmittel, sek.-aromatische Diamine, 3,3',5,5'-tetra-n-alkylsubstituierte 4,4'-Diamino-diphenylmethane, Treibmittel, Hilfs- und Zusatzstoffe nach der Reaktionsspritzgußtechnik verarbeitet werden.

**Claims**

1. A one-shot process for the production of cellular or non-cellular polyurethane-polyurea moldings by reacting organic polyisocyanates, optionally containing urethane groups, carbodiimide groups and/or isocyanurate rings, with polyols, diaminodiphenylmethanes and, if desired, secondary aromatic diamines, 3,3',5,5'-tetra-n-alkyl-substituted 4,4'-diaminodiphenylmethanes, and chain extenders having molecular weights of less than 400 selected from the group consisting of aliphatic and/or araliphatic diols, triols, hydroxyl-containing polyalkylene oxides, in the presence or absence of blowing agents, auxiliaries and additives, wherein there are used as diaminodiphenylmethanes compounds of the formula

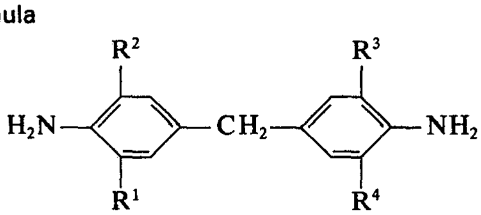

(I)

where $R^1$, $R^2$, $R^3$ and $R^4$ are identical or different and each denotes

—$CH_3$, —$C_2H_5$, 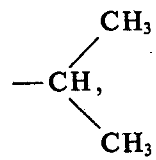 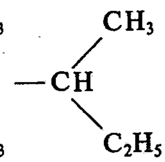 or —$C(CH_3)_3$,

but at least one of the radicals must be

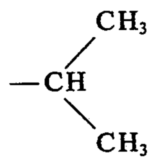 or 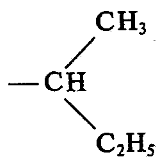

2. A process as claimed in claim 1, wherein there are used as diaminodiphenylmethanes compounds of the formula (I) in admixture with isomers of the formula

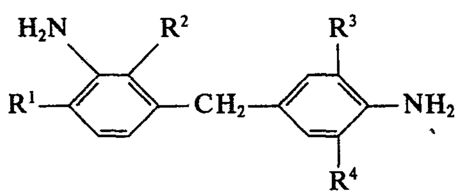

(II)

or

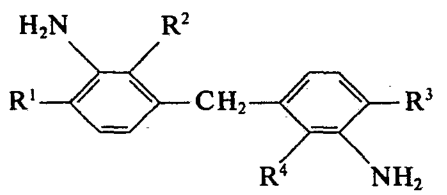

(III)

or with a mixture of such isomers, in which formulae $R^1$, $R^2$, $R^3$ and $R^4$ have the above meanings.

3. A process as claimed in claims 1 and 2, wherein the diaminodiphenylmethanes of the formula (I) and the diaminodiphenylmethanes of the formula (II) or (III) or a mixture thereof are present in the mixture in a weight ratio of 60 : 40 to 99.99 : 0.01.

4. A process as claimed in claims 1 to 3, wherein the organic polyisocyanates, polyols, diaminodiphenylmethanes, catalysts and, if desired, chain extenders, secondary aromatic amines, 3,3',5,5'-tetra-n-alkyl-substituted 4,4'-diaminodiphenylmethanes, blowing agents, auxiliaries and additives are processed by reaction injection molding techniques.

## Revendications

1. Procédé de préparation de corps moulés en polyuréthane-polyurée, éventuellement cellulaires, par réaction de polyisocyanates organiques, contenant éventuellement des groupes carbodiimide et/ou des noyaux isocyanurate, des polyols, diamino-diphényluréthanes, ainsi que, éventuellement, des diamines aromatiques secondaires, des 4,4'-diamino-diphényluréthanes-tétra-n-substituées par alkyle en 3,3', 5,5', des prolongateurs de chaîne à poids moléculaires inférieurs à 400, appartenant au groupe des diols aliphatiques et/ou araliphatiques, triols et polyalkylenoxydes à groupes hydroxyle, en présence de catalyseurs et éventuellement de gonflants, auxiliaires et additivs, selon le procédé one-shot, caractérisé par le fait qu'on utilise, comme diamino-diphénylméthanes, des composés de formule

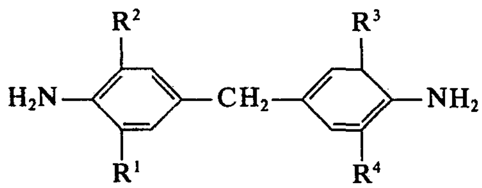

(I)

dans laquelle $R^1$, $R^2$, $R^3$ et $R^4$ sont identiques ou différents et représentent

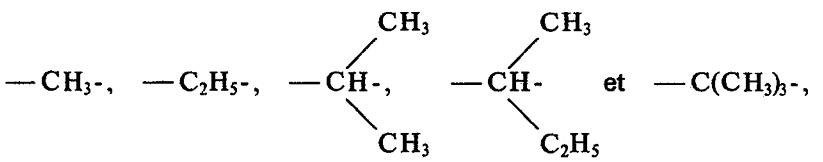

et

mais au moins un des restes devant être

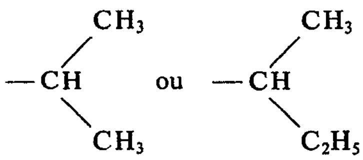

ou

2. Procédé selon la revendication 1, caractérisé par le fait que l'on utilise, comme diamino-diphényl-methanes, des composés de formule (I) en mélange avec des isomères de formules

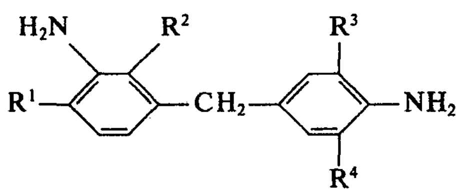

(II)

et/ou

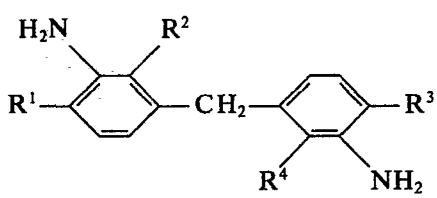

(III)

$R^1$, $R^2$, $R^3$ et $R^4$ ayant la signification sus-indiquée.

3. Procédé selon les revendications 1 et 2, caractérisé par le fait que les diamino-diphénylméthanes de formule (I) et formule (II) et/ou (III) se trouvent dans le mélange en rapport en poids de 60/40 à 99,99/0,01.

4. Procédé selon les revendications 1 à 3, caractérisé par le fait que les polyisocyanates organiques, polyols, diamino-diphénylméthanes, catalyseurs, ainsi qu'éventuellement les prolongateurs de chaînes, diamines aromatiques secondaires, 4,4'-diamino-diphénylméthanes-tétra-n-substituées par alkyle en 3,3', 5,5', gonflants, auxiliaires et additifs sont traités selon la technique de réaction par injection.